# EUROPEAN PATENT APPLICATION

(11) **EP 3 412 508 A1**
(43) Date of publication of application: **12.12.2018**
(21) Application number: 17747264.4
(22) Date of filing: 24.01.2017
(51) Int. Cl.: B60R 1/07

(54) **VIEWING DEVICE FOR VEHICLE**

(30) Priority: 03.02.2016 JP 2016019218
(71) Applicant: Kabushiki Kaisha Tokai Rika Denki Seisakusho, Ohguchi-cho Niwa-gun Aichi 480-0195 (JP)
(72) Inventor: YOSHIDA, Shigeki, Niwa-gun Aichi 480-0195 (JP); ISHIHARA, Mamoru, Niwa-gun Aichi 480-0195 (JP); FUJISAKI, Suguru, Niwa-gun Aichi 480-0195 (JP)
(74) Representative: TBK
(86) International application number: PCT/JP2017/002369
(87) International publication number: WO 2017/135105

(57) **Abstract**

In a vehicle door mirror device, an outer peripheral face of an insertion cylinder of a visor body substantially fits together with an inner peripheral face of a fitting cylinder of reinforcement, and a housing space is formed between the visor body and the reinforcement. A water drainage groove is provided on the outer peripheral face of the insertion cylinder. Water infiltrating between the insertion cylinder and the fitting cylinder accordingly flows into the water drainage groove, flows down the water drainage groove, and flows downward from a lower end of the water drainage groove. This enables water to be suppressed from infiltrating into the housing space.

## Description

### Technical Field

The present invention relates to a vehicle visual recognition device in which a visual recognition means assists visual recognition by an occupant of a vehicle.

### Background Art

In an electric door mirror described in Japanese Patent Application Laid-Open (JP-A) No. 2013-67194, a housing space is formed between a motor holder and an inner member. A motor is housed in the housing space, and the mirror is tilted by operating the motor.

In such electric door mirrors, being able to suppress liquid (for example, water) from infiltrating into the housing space is preferable.

### SUMMARY OF INVENTION

### Technical Problem

In consideration of the above circumstances, an object of the present invention is to obtain a vehicle visual recognition device capable of suppressing liquid from infiltrating into a housing space.

### Solution to Problem

A vehicle visual recognition device of a first aspect of the present invention includes a visual recognition means, an operating mechanism, and a housing body. The visual recognition means assists visual recognition by an occupant of a vehicle. The operating mechanism is operated so as to tilt the visual recognition means. The housing body includes an outer peripheral member and an inner peripheral member, with the outer peripheral member disposed at an outer peripheral side of an inside portion of the inner peripheral member and a housing space being formed between the inner peripheral member and the outer peripheral member. The operating mechanism is housed in the housing space. A recess portion is provided on an outer peripheral face of the inside portion and enables downward flow of a liquid.

A vehicle visual recognition device of a second aspect of the present invention is the vehicle visual recognition device of the first aspect of the present invention, wherein the recess portion is provided on an outer peripheral face of an upper side section of the inside portion.

A vehicle visual recognition device of a third aspect of the present invention includes a visual recognition means, an operating mechanism, and a housing body. The visual recognition means assists visual recognition by an occupant of a vehicle. The operating mechanism is operated so as to tilt the visual recognition means. The housing body includes an inner peripheral member and an outer peripheral member, with the inner peripheral member disposed at an inner peripheral side of an outside portion of the outer peripheral member and a housing space being formed between the inner peripheral member and the outer peripheral member. The operating mechanism is housed in the housing space. A recess portion is provided on an inner peripheral face of the outside portion and enables downward flow of a liquid.

A vehicle visual recognition device of a fourth aspect of the present invention is the vehicle visual recognition device of the third aspect of the present invention, wherein the recess portion is provided on an inner peripheral face of a lower side section of the outside portion.

A vehicle visual recognition device of a fifth aspect of the present invention includes a visual recognition means, an operating mechanism, and a housing body. The visual recognition means assists visual recognition by an occupant of a vehicle. The operating mechanism is operated so as to tilt the visual recognition means. The housing body includes an outer peripheral member and an inner peripheral member, with an outside portion of the outer peripheral member disposed at an outer peripheral side of an inside portion of the inner peripheral member and a housing space being formed between the inner peripheral member and the outer peripheral member. The operating mechanism is housed in the housing space. The recess portion is provided at whichever an outer peripheral face of the inside portion or an inner peripheral face of the outside portion is disposed at a lower side, and enabling downward flow of a liquid.

A vehicle visual recognition device of a sixth aspect of the present invention is the vehicle visual recognition device of any one of the first aspect to the fifth aspect of the present invention, wherein a gap dimension between the inside portion and the outer peripheral member, or a gap dimension between the inner peripheral member and the outside portion, is smaller on a housing space side than on an opposite side from the housing space.

A vehicle visual recognition device of a seventh aspect of the present invention is the vehicle visual recognition device of any one of the first aspect to the sixth aspect of the present invention, wherein a depth dimension of the recess portion increases on progression from a housing space side toward an opposite side from the housing space.

A vehicle visual recognition device of an eighth aspect of the present invention is the vehicle visual recognition device of any one of the first aspect to the seventh aspect of the present invention, wherein an angle of a peripheral face of the recess portion with respect to an opening plane of the recess portion is greater on a housing space side than on an opposite side from the housing space.

A vehicle visual recognition device of a ninth aspect of the present invention is the vehicle visual recognition device of any one of the first aspect to the eighth aspect of the present invention, wherein the recess portion is open on an opposite side from the housing space.

### Advantageous Effects

In the vehicle visual recognition device of the first aspect of the present invention, the visual recognition means assists visual recognition of the occupant of the vehicle. Moreover, in the housing body, the outer peripheral member is disposed at the outer peripheral side of the inside portion of the inner peripheral member and the housing space is formed between the inner peripheral member and the outer peripheral member. The operating mechanism is housed in the housing space. Furthermore, the visual recognition means is tilted by operating the operating mechanism.

The recess portion is provided on the outer peripheral face of the inside portion of the inner peripheral member, and the recess portion enables downward flow of a liquid. Liquid can thereby be suppressed from infiltrating into the housing space from between the inside portion of the inner peripheral member and the outer peripheral member.

In the vehicle visual recognition device of the second aspect of the present invention, the recess portion is provided on the outer peripheral face of the upper side section of the inside portion of the inner peripheral member. The recess portion thereby enables effective downward flow of a liquid.

In the vehicle visual recognition device of the third aspect of the present invention, the visual recognition means assists the visual recognition of the occupant of the vehicle. Moreover, in the housing body, the inner peripheral member is disposed at the inner peripheral side of the outside portion of the outer peripheral member and the housing space is formed between the inner peripheral member and the outer peripheral member. The operating mechanism is housed in the housing space. Furthermore, the visual recognition means is tilted by operating the operating mechanism.

The recess portion is provided on the inner peripheral face of the outside portion of the outer peripheral member, and the recess portion enables downward flow of a liquid. Liquid can thereby be suppressed from infiltrating into the housing space from between the inner peripheral member and the outside portion of the outer peripheral member.

In the vehicle visual recognition device of the fourth aspect of the present invention, the recess portion is provided at the inner peripheral face of the lower side section of the outside portion of the outer peripheral member. The recess portion thereby enables effective downward flow of a liquid.

In the vehicle visual recognition device of the fifth aspect of the present invention, the visual recognition means assists the visual recognition of the occupant of the vehicle. Moreover, in the housing body, the outside portion of the outer peripheral member is disposed at the outer peripheral side of the inside portion of the inner peripheral member, and the housing space is formed between the inner peripheral member and the outer peripheral member. The operating mechanism is housed in the housing space. Furthermore, the visual recognition means is tilted by operating the operating mechanism.

The recess portion is provided at whichever the outer peripheral face of the inside portion of the inner peripheral member or the inner peripheral face of the outside portion of the outer peripheral member is disposed at the lower side, and the recess portion enables downward flow of a liquid. Liquid can thereby be suppressed from infiltrating into the housing space from between the inside portion of the inner peripheral member and the outside portion of the outer peripheral member.

In the vehicle visual recognition device of the sixth aspect of the present invention, the gap dimension between the inside portion of the inner peripheral member and the outer peripheral member, or the gap dimension between the inner peripheral member and the outside portion of the outer peripheral member, is smaller on the housing space side than on the opposite side from the housing space. This enables better suppression of liquid from infiltrating into the housing space from between the inside portion of the inner peripheral member and the outer peripheral member, or from between the inner peripheral member and the outside portion of the outer peripheral member.

In the vehicle visual recognition device of the seventh aspect of the present invention, the depth dimension of the recess portion increases on progression from the housing space side toward the opposite side from the housing space. This enables better suppression of liquid from infiltrating into the housing space from between the inside portion of the inner peripheral member and the outer peripheral member.

In the vehicle visual recognition device of the eighth aspect of the present invention, the angle of the peripheral face of the recess portion with respect to the opening plane of the recess portion is greater on the housing space side than on an opposite side from the housing space. This enables better suppression of liquid from infiltrating into the housing space from between the inside portion of the inner peripheral member and the outer peripheral member.

In the vehicle visual recognition device of the ninth aspect of the present invention, the recess portion is open on the opposite side from the housing space. This enables liquid in the recess portion to be discharged from the opposite side from the housing space.

### BRIEF DESCRIPTION OF DRAWINGS

Fig. 1 is an exploded perspective view of a vehicle door mirror device according to a first exemplary embodiment of the present invention, as viewed from a vehicle front side and vehicle width direction inside.
Fig. 2 is a cross-section of relevant portions of the vehicle door mirror device according to the first exemplary embodiment of the present invention, as viewed from a vehicle width direction outside.
Fig. 3 is a perspective view of a visor body of the vehicle door mirror device according to the first exemplary embodiment of the present invention, as viewed from a vehicle rear side and vehicle width direction inside.
Fig. 4 is an enlarged cross-section of relevant portions at an upper side section of the vehicle door mirror device according to the first exemplary embodiment of the present invention, as viewed from a vehicle width direction outside.
Fig. 5A is an enlarged cross-section of relevant portions at an upper side section of a vehicle door mirror device according to a modified example of the first exemplary embodiment of the present invention, as viewed from a vehicle width direction outside.
Fig. 5B is an enlarged cross-section of relevant portions at a lower side section of the vehicle door mirror device according to a modified example of the first exemplary embodiment of the present invention, as viewed from a vehicle width direction outside.
Fig. 6 is an enlarged cross-section of relevant portions at an upper side section of a vehicle door mirror device according to a second exemplary embodiment of the present invention, as viewed from a vehicle width direction outside.
Fig. 7A is an enlarged cross-section of relevant portions at an upper side section of a vehicle door mirror device according to a modified example of the second exemplary embodiment of the present invention, as viewed from a vehicle width direction outside.
Fig. 7B is an enlarged cross-section of relevant portions at a lower side section of the vehicle door mirror device according to a modified example of the second exemplary embodiment of the present invention, as viewed from a vehicle width direction outside.
Fig. 8A is an enlarged cross-section of relevant portions at a lower side section of a vehicle door mirror device according to a third exemplary embodiment of the present invention, as viewed from a vehicle width direction outside.
Fig. 8B is an enlarged cross-section of relevant portions at a lower side section of the vehicle door mirror device according to the third exemplary embodiment of the present invention, as viewed from a vehicle width direction outside.
Fig. 9A is an enlarged cross-section of relevant portions at a lower side section of a vehicle door mirror device according to a fourth exemplary embodiment of the present invention, as viewed from a vehicle width direction outside.
Fig. 9B is an enlarged cross-section of relevant portions at a lower side section of the vehicle door mirror device according to the fourth exemplary embodiment of the present invention, as viewed from a vehicle width direction outside.

### DESCRIPTION OF EMBODIMENTS

### First Exemplary Embodiment

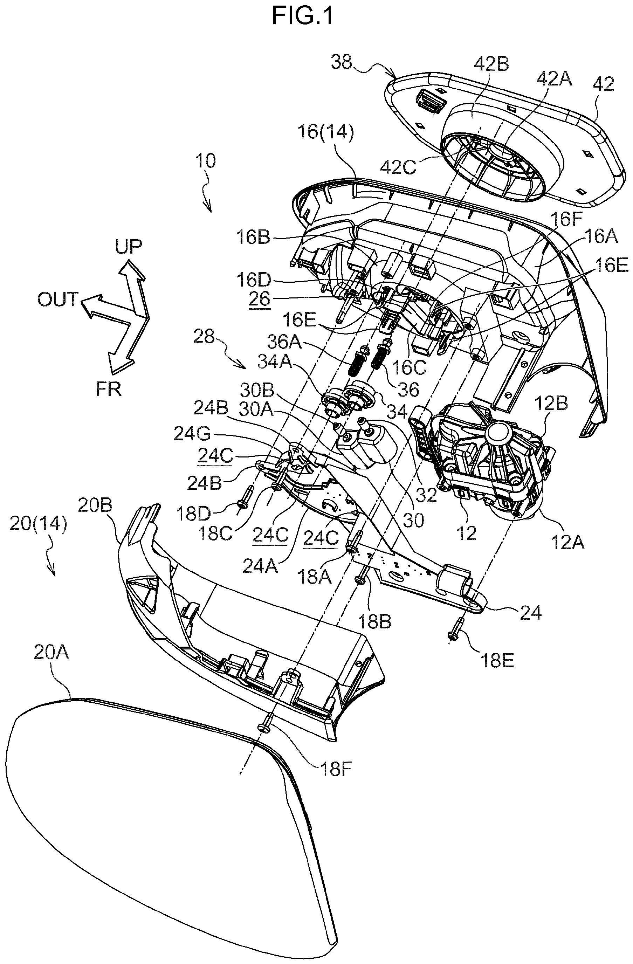

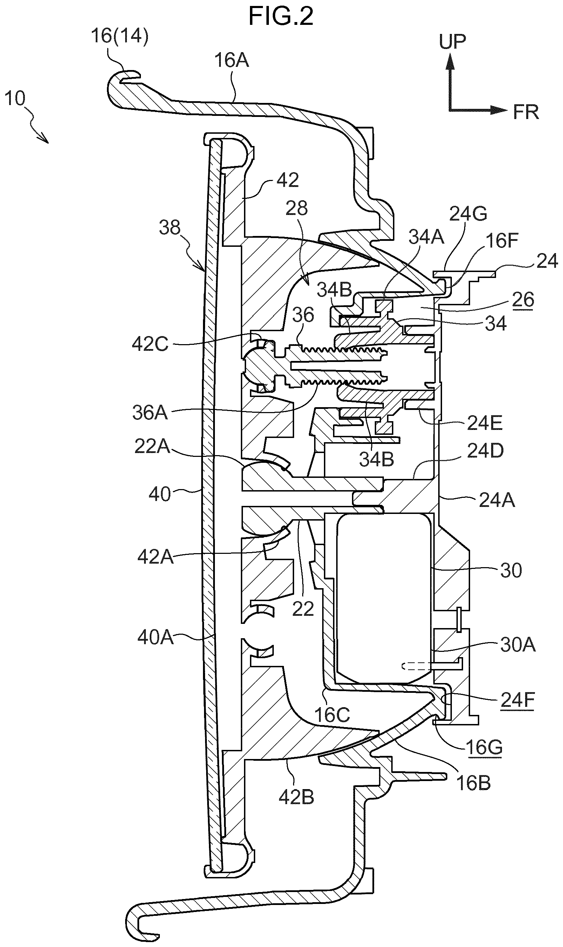

Fig. 1 is an exploded perspective view of a vehicle door mirror device 10, which serves as a vehicle visual recognition device according to a first exemplary embodiment of the present invention, as viewed from a vehicle front side and vehicle width direction inside (vehicle left side). Fig. 2 is a cross-section of relevant portions of the vehicle door mirror device 10, as viewed from a vehicle width direction outside (vehicle right side). Note that in the drawings the arrow FR indicates a direction toward the vehicle front, the arrow OUT indicates a vehicle width direction outside, and the arrow UP indicates upwards.

The vehicle door mirror device 10 according to the present exemplary embodiment is supported at an outside of a door (front side door, vehicle body side) of a vehicle.

As illustrated in Fig. 1, the vehicle door mirror device 10 includes a stowing mechanism 12. A stand 12A, which serves as a support member, is provided in the stowing mechanism 12. The vehicle door mirror device 10 is supported on the door by the stand 12A being supported at a vehicle front side end of an up-down direction intermediate portion of the door. A swing body 12B is supported by the stand 12A. The swing body 12B is swung about a vertical axis with respect to the stand 12A by electrically operating the stowing mechanism 12. The swing body 12B is electrically connected to a controller (not illustrated in the drawings) on the vehicle body side, and the stowing mechanism 12 is electrically operated under control by the controller.

A visor 14, which is made from resin and serves as an outer peripheral body, is supported on the swing body 12B of the stowing mechanism 12. A visor body 16, which serves as an inner peripheral member configuring a housing body, is provided to the visor 14. The swing body 12B is fixed to a vehicle front side of a vehicle width direction inside end portion of the visor body 16, such as by fastening a first screw 18A and a second screw 18B, which serves as assembly members. A visor cover 20, which has a curved plate shape and serves as a covering member, is assembled at the vehicle front side of the visor body 16 with reinforcement 24, described below, interposed therebetween. An outer periphery of the visor cover 20 is fitted to an outer periphery of the visor body 16, so that the visor cover 20 covers the vehicle front side of the visor body 16. An upper cover 20A is provided at an upper side of the visor cover 20, and a lower cover 20B is provided at a lower side thereof. The visor cover 20 is configured by combining the upper cover 20A and the lower cover 20B.

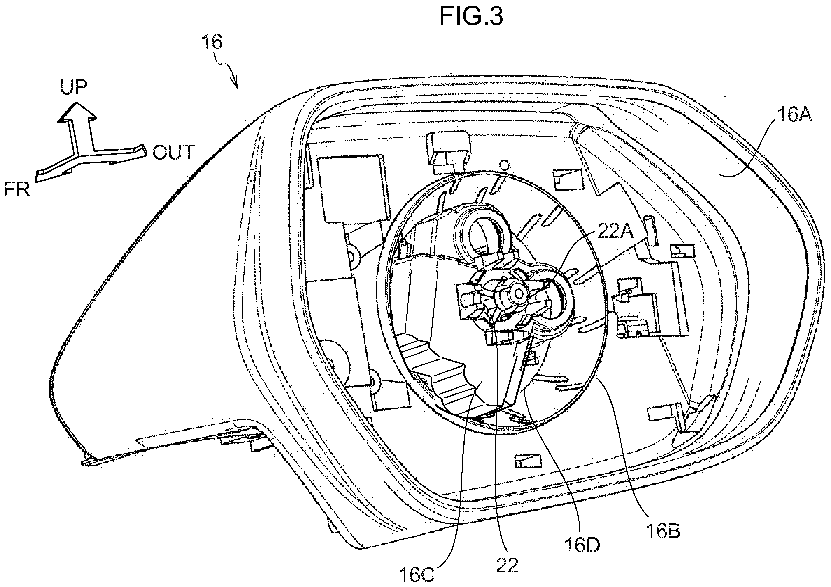

As illustrated in Fig. 1 to Fig. 3, a substantially cuboid box-shaped housing wall 16A, which serves as an open portion, is provided to the visor body 16. The inside of the housing wall 16A is open toward the vehicle rear side.

A support wall 16B (case lower portion), which serves as a support portion, is integrally provided to a vehicle front side wall (bottom wall) of the housing wall 16A. The support wall 16B projects out to the vehicle front side and vehicle rear side of the vehicle front side wall of the housing wall 16A. The support wall 16B is substantially cylindrical in shape, and is disposed such that a center axis line of the support wall 16B is parallel to the vehicle front-rear direction. The support wall 16B has a spherical wall shape, with the internal diameter dimension of the support wall 16B gradually increasing on progression toward the vehicle rear.

A covering wall 16C (case upper portion), which has a receptacle shape and serves as a housing portion, is provided inside the support wall 16B. The entire periphery at the vehicle front side end of the covering wall 16C is integrated to the entire periphery at the vehicle front side end of the support wall 16B. A coupling wall 16D having a flat plate shape is integrally provided between the vehicle front side end of the covering wall 16C and the vehicle front side end of the support wall 16B. The coupling wall 16D couples together the vehicle front side end of the covering wall 16C and the vehicle front side end of the support wall 16B at parts where the vehicle front side end of the covering wall 16C and the vehicle front side end of the support wall 16B are not directly integrated together. The inside of the covering wall 16C is open toward the vehicle front side of the support wall 16B. The inside of the covering wall 16C is thereby open toward the vehicle front side of the housing wall 16A.

A predetermined number (four in the present exemplary embodiment) of restriction plates 16E, which are rectangular plate shaped serves as restriction portions, are integrally provided to the coupling wall 16D. The restriction plates 16E project out from the coupling wall 16D toward the vehicle front side. The predetermined number of restriction plates 16E are arranged at a substantially uniform spacing around the peripheral direction of the support wall 16B. The restriction plates 16E are disposed so as to intersect with the radial direction of the support wall 16B.

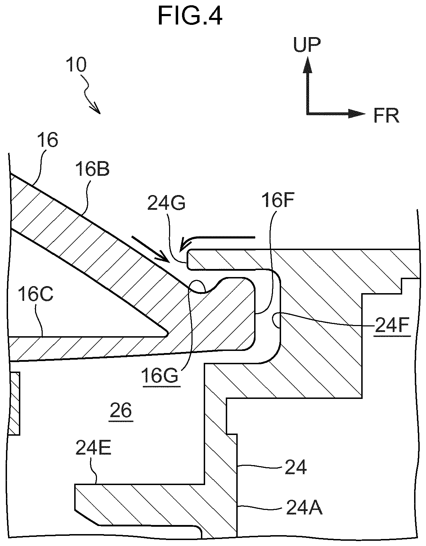

An insertion cylinder 16F (see Fig. 4), which has a cylindrical shape and serves as an inside portion, is provided to a vehicle front side end portion of the support wall 16B. The insertion cylinder 16F projects out to the vehicle front side, and is disposed such that an outer peripheral face of the insertion cylinder 16F is coaxial to the support wall 16B. A water drainage groove 16G, which serves as a recess portion and has a substantially triangular profile in cross-section, is formed around the entire periphery of a vehicle rear side part of the outer peripheral face of the insertion cylinder 16F. The water drainage groove 16G extends around the peripheral direction of the insertion cylinder 16F. A width direction (vehicle front-rear direction) dimension of the water drainage groove 16G increases on progression toward a radial direction outside of the insertion cylinder 16F. The vehicle front side face of the water drainage groove 16G forms a greater angle, than the vehicle rear side face of the water drainage groove 16G, to an opening plane of the water drainage groove 16G (a face in the same plane as the outer peripheral face of the insertion cylinder 16F).

A retention tube 22, which has a substantially circular tube shape and serves as a retention portion, is integrally provided to a vehicle rear side wall (bottom wall) of the covering wall 16C. The retention tube 22 projects out to the vehicle front side and the vehicle rear side of the vehicle rear side wall of the covering wall 16C, and is disposed coaxially to the support wall 16B. A retention ball 22A having a substantially spherical shape is provided at a vehicle rear side end portion of the retention tube 22. A peripheral face of a vehicle front side portion of the retention ball 22A has a spherical face profile, with the center of the spherical face profile aligned with a center of the inner peripheral face of the support wall 16B.

The reinforcement 24, which is substantially made from resin in an elongated plate shape and serves as an outer peripheral member configuring the housing body, is provided at the vehicle front side of the visor body 16 and the swing body 12B of the stowing mechanism 12. A vehicle width direction intermediate portion of the reinforcement 24 is fixed, together with the swing body 12B, to the visor body 16 by fastening the first screw 18A and the second screw 18B.

A pair of assembly plates 24B, which have triangular plate shapes and serve as assembly portions, are integrally provided to vehicle width direction outside portions of the reinforcement 24. The pair of assembly plates 24B each project from the reinforcement 24 toward the upper side and the vehicle width direction outside. A vehicle width direction outside portion of the reinforcement 24 is fixed by the pair of assembly plates 24B to the visor body 16 by fastening a third screw 18C and a fourth screw 18D, which each serve as assembly members. The vehicle width direction inside end portion of the reinforcement 24 is fixed to the swing body 12B by fastening a fifth screw 18E, which serves as an assembly member.

The reinforcement 24 has a higher rigidity than that of the visor body 16, and the reinforcement 24 reinforces the visor body 16 and the swing body 12B. Moreover, the visor cover 20 (the lower cover 20B) of the visor 14 is fixed to the reinforcement 24 by fastening a sixth screw 18F, which serves as a fixing member. The visor cover 20 is thereby assembled to the visor body 16 with the reinforcement 24 interposed therebetween, as described above.

An electrical circuit (not illustrated in the drawings) is provided to the reinforcement 24. The electrical circuit is electrically connected to the controller.

A bottom wall portion 24A, which has a circular disk shape and serves as a blocking portion, is provided to a vehicle width direction outside portion of the reinforcement 24. The bottom wall portion 24A is disposed coaxially to the support wall 16B of the visor body 16. A fitting recess portion 24F, which has a rectangular profile in cross-section and serves as an insertion portion, is formed around the entire periphery of an outer peripheral edge on the vehicle rear side face of the bottom wall portion 24A. A fitting cylinder 24G, which has a circular cylindrical shape and serves as an outside portion (fitted portion), is provided to the bottom wall portion 24A, at the outer peripheral side of and coaxially to the fitting recess portion 24F. The insertion cylinder 16F of the visor body 16 is inserted into the fitting recess portion 24F (inside the fitting cylinder 24G) and the outer peripheral face of the insertion cylinder 16F substantially fits together with the inner peripheral face of the fitting cylinder 24G. The bottom wall portion 24A thereby covers and blocks off the vehicle front side of the support wall 16B, the covering wall 16C, and the coupling wall 16D of the visor body 16. A housing space 26 is formed between the bottom wall portion 24A and the support wall 16B, the covering wall 16C, and the coupling wall 16D. Moreover, all of the vehicle front side face of the water drainage groove 16G in the insertion cylinder 16F and at least a portion of the vehicle rear side face thereof, are inserted inside the fitting cylinder 24G (see Fig. 4).

A predetermined number (four in the present exemplary embodiment) of restriction holes 24C, which each have a rectangular shape and serve as restricting portions, are formed piercing through the bottom wall portion 24A. The predetermined number of restriction holes 24C are arranged at a substantially uniform spacing around the peripheral direction of the bottom wall portion 24A. Each of the restriction holes 24C is disposed so as to intersect with the radial direction of the bottom wall portion 24A. The restriction plates 16E of the visor body 16 are inserted (fitted) into the restriction holes 24C. Movement in the peripheral direction and the radial direction of the bottom wall portion 24A with respect to the visor body 16 is thereby restricted.

A fit-insertion column 24D, which has a substantially circular column shape and serves as a fit-insertion portion, is integrally provided at a central portion of the bottom wall portion 24A. The fit-insertion column 24D projects out from the bottom wall portion 24A toward the vehicle rear side, and is disposed coaxially to the bottom wall portion 24A. A leading end portion of the fit-insertion column 24D has a reduced diameter. The leading end portion of the fit-insertion column 24D is fit-inserted into the retention tube 22 of the visor body 16 from the vehicle front side.

Circular tube shaped support tubes 24E are integrally provided to an upper portion and vehicle width direction outside portion of the bottom wall portion 24A, at the bottom wall portion 24A-radial direction inside of each of the assembly plates 24B. Each of the support tube 24E projects out from the bottom wall portion 24A toward the vehicle rear side, and is disposed with a center axis line parallel to the center axis line of the bottom wall portion 24A.

A mirror face adjustment mechanism 28, which serves as an operating mechanism is housed in the housing space 26, between the covering wall 16C of the visor body 16 and the bottom wall portion 24A of the reinforcement 24.

A pair of motors 30, which serve as drive means, are provided in the mirror face adjustment mechanism 28. A main body 30A of each of the motors 30 is retained in a state clamped between the covering wall 16C and the bottom wall portion 24A. An output shaft 30B extends from the main body 30A, and a worm 32, which serves as an output member, is fixed to the output shaft 30B. The electrical circuit of the reinforcement 24 is electrically connected to each of the main bodies 30A. The motors 30 are driven under control by the controller to electrically operate the mirror face adjustment mechanism 28.

A pair of wheel drives 34, which are each made from resin in a substantially circular tube shape and serve as transmission members, are provided in the mirror face adjustment mechanism 28. In a state in which the vehicle front side portion of each of the wheel drives 34 is fit-inserted into the support tubes 24E of the bottom wall portion 24A, the wheel drives 34 are clamped between the covering wall 16C and the bottom wall portion 24A and retained so as to be rotatable about their axes.

A worm wheel 34A is formed coaxially to an outer peripheral edge at an intermediate portion in the axial direction (vehicle front-rear direction) of each of the wheel drives 34. The worm wheels 34A are each meshed (engaged) with the respective worms 32 of the motors 30. Thus the worm wheels 34A are rotated by driving of each of the motors 30 so as to rotate the worms 32, and the wheel drives 34 are rotated.

A predetermined number (four in the present exemplary embodiment) of meshing claws 34B, which serve as engaging portions, are formed to an inner peripheral portion of each of the wheel drives 34 at the vehicle rear side of the worm wheel 34A. The predetermined number of meshing claws 34B are disposed at even spacings around the peripheral direction of the wheel drive 34. The meshing claws 34B extend toward the vehicle rear side and are elastic. The leading ends (vehicle rear side ends) of the meshing claws 34B project toward the radial direction inside of the respective wheel drives 34.

A rod drive 36, which has a substantially circular column shape and serves as a moving member, is coaxially inserted inside each of the wheel drives 34. Each of the rod drives 36 projects through the covering wall 16C toward the vehicle rear side. One of the rod drives 36 is disposed above (or alternatively below) a center axis line of the support wall 16B of the visor body 16. The other of the rod drives 36 is disposed at the vehicle width direction outside (or alternatively at the vehicle width direction inside) of the center axis line of the support wall 16B.

Portions other than leading end portions (vehicle rear side end portions) of the rod drives 36 configure respective threads 36A. The leading ends of the meshing claws 34B of the wheel drives 34 are meshed (engaged) with the respective threads 36A. The leading end portions of the rod drives 36 have substantially spherical shapes.

A mirror body 38, which serves as a visual recognition means, is housed inside the housing wall 16A of the visor body 16. The entire periphery and vehicle front side of the mirror body 38 is covered by the housing wall 16A.

A mirror 40, which has a substantially rectangular plate shape and serves as a visual recognition portion, is provided at a vehicle rear side portion of the mirror body 38. The front face of the mirror 40 is exposed at the vehicle rear side of the visor body 16. A mirror face 40A (a surface of a reflecting layer on the back side) of the mirror 40 faces toward the vehicle rear side. Vehicle rearward visual recognition by an occupant (in particular the driver) of the vehicle is assisted by the mirror 40.

A mirror holder 42, which is made from resin and has a substantially rectangular plate shape, is provided as a sliding body on a vehicle front side portion of the mirror body 38. The entire periphery of the mirror holder 42 fixes (retains) the entire periphery of the mirror 40 and the mirror holder 42 covers the vehicle front side (back side) of the mirror 40.

An attachment wall 42A, which has a substantially tube shape and serves as an attachment portion, is formed to the mirror holder 42 at a vehicle front side of a central position (center of gravity position) of the mirror 40. The attachment wall 42A is disposed coaxially to the support wall 16B of the visor body 16. The attachment wall 42A has a substantially spherical wall profile, with an inner diameter dimension of the attachment wall 42A gradually increasing on progression toward the vehicle rear. The retention ball 22A of the retention tube 22 of the visor body 16 is fit-inserted inside the attachment wall 42A. The mirror body 38 is thereby retained on the retention tube 22 so as to be capable of tilting and sliding.

A sliding wall 42B, which has a substantially cylindrical shape and serves as a sliding portion, is integrally provided at a vehicle front side of the mirror holder 42. The sliding wall 42B is disposed coaxially to the support wall 16B of the visor body 16. The sliding wall 42B has a spherical wall profile, and the external diameter dimension of the sliding wall 42B gradually increases on progression toward the vehicle rear. The outer peripheral face of the sliding wall 42B contacts the inner peripheral face of the support wall 16B, and the sliding wall 42B is supported by the support wall 16B so as to be capable of tilting and sliding.

The mirror holder 42 includes a pair of swivel walls 42C, which each have a substantially tube shape and serve as a swivel portion, formed at a radial direction inside of the sliding wall 42B. One of the swivel walls 42C is disposed above (or alternatively below) the center axis line of the support wall 16B of the visor body 16. The other of the swivel walls 42C is disposed at the vehicle width direction outside (or alternatively at the vehicle width direction inside) of the center axis line of the support wall 16B. The swivel walls 42C are disposed with the center axis lines thereof parallel to the center axis line of the support wall 16B of the visor body 16. The swivel walls 42C each have a substantially spherical wall profile, and the inner diameter dimension of the swivel walls 42C gradually increases on progression from the two vehicle front-rear direction end sides of the swivel walls 42C toward the vehicle front-rear direction center thereof.

The leading end portions of the rod drives 36 of the mirror face adjustment mechanism 28 are fit-inserted into and retained by the swivel walls 42C. The swivel walls 42C permit swiveling with respect to the leading end portion of the respective rod drives 36, and restrict axial rotation of the rod drives 36. Thus, as stated above, in the mirror face adjustment mechanism 28, as the wheel drives 34 (including the meshing claws 34B) are rotated, the meshing position of the leading ends of the meshing claws 34B with the threads 36A of the respective rod drives 36 is displaced, and the respective rod drives 36 are moved (slide) in the vehicle front-rear direction (axial direction).

Next, explanation follows regarding operation of the present exemplary embodiment.

In the vehicle door mirror device 10 configured as described above, the swing body 12B swings with respect to the stand 12A by electrically operating the stowing mechanism 12, and the mirror body 38 (including the visor 14 (the visor body 16 and the visor cover 20), the reinforcement 24, and the mirror face adjustment mechanism 28) swing as a unit with the swing body 12B. The mirror body 38 thereby swings toward the vehicle rear side and the vehicle width direction inside, and the mirror body 38 is stowed. Moreover, the mirror body 38 is flipped out (deployed, returned) by the mirror body 38 being swung toward the vehicle front side and the vehicle width direction outside.

Moreover, when the motors 30 are driven by electrically operating the mirror face adjustment mechanism 28 so as to rotate the worm 32, the wheel drives 34 are rotated, and the rod drives 36 moved in the vehicle front-rear direction. Thus, by the mirror body 38 (the mirror 40 and the mirror holder 42) being tilted by the rod drives 36 in at least one of the up-down direction or the vehicle width direction, the angle of the mirror face 40A of the mirror 40 (i.e. the visual recognition direction of the occupant assisted by the mirror 40) is adjusted in at least one of the up-down direction or the vehicle width direction. Moreover, when the mirror body 38 is tilted, the sliding wall 42B of the mirror body 38 is slid against, and is supported by, the support wall 16B of the visor body 16.

However, the outer peripheral face of the insertion cylinder 16F of the visor body 16 substantially fits together with the inner peripheral face of the fitting cylinder 24G of the reinforcement 24. The mirror face adjustment mechanism 28 is housed in the housing space 26 formed between the support wall 16B, covering wall 16C, and coupling wall 16D of the visor body 16 and the bottom wall portion 24A of the reinforcement 24.

The water drainage groove 16G is provided around the entire periphery of the outer peripheral face of the insertion cylinder 16F. Thus water (liquid) from the outer peripheral face of the support wall 16B and the outer peripheral face of the fitting cylinder 24G infiltrating between the insertion cylinder 16F and the fitting cylinder 24G, flows into the water drainage groove 16G. The water (liquid) accordingly flows down the water drainage groove 16G, and flows down (drains) from the bottom end of the water drainage groove 16G. This enables water to be suppressed from infiltrating into the housing space 26 from between the insertion cylinder 16F and the fitting cylinder 24G, and enables water to be suppressed from reaching the mirror face adjustment mechanism 28 (and in particular the motors 30). Moreover, being able to suppress infiltration of water into the housing space 26 by suppression using the water drainage groove 16G alone enables simplification of the configuration to suppress water infiltrating into the housing space 26. This can also be accomplished without needing to add any separate components (for example, a rubber ring) to suppress infiltration of water into the housing space 26. This enables costs to be reduced due to not needing to increase the number of components or the number of assembly processes.

Moreover, the water drainage groove 16G in the insertion cylinder 16F is inserted inside the fitting cylinder 24G, and a gap dimension between the insertion cylinder 16F and the fitting cylinder 24G at a portion further toward vehicle front side than the water drainage groove 16G is made smaller than the gap dimension between the insertion cylinder 16F and the fitting cylinder 24G at the portion where the water drainage groove 16G is disposed. This means that water that has infiltrated between the insertion cylinder 16F and the fitting cylinder 24G can be better suppressed from infiltrating into the housing space 26 from between the insertion cylinder 16F and the fitting cylinder 24G, by utilizing the action of movement force from the vehicle front side face of the water drainage groove 16G toward the vehicle rear side (from the housing space 26 side toward the opposite side from the housing space 26).

Moreover, a depth dimension of the vehicle front side portion of the water drainage groove 16G increases on progression toward the vehicle rear side. Thus water that has infiltrated between the insertion cylinder 16F and the fitting cylinder 24G can be better suppressed from infiltrating into the housing space 26 from between the insertion cylinder 16F and the fitting cylinder 24G, by utilizing the action of movement force from the vehicle front side face of the water drainage groove 16G toward the vehicle rear side.

Moreover, the angle of the vehicle front side face of the water drainage groove 16G with respect to the opening plane of the water drainage groove 16G is made greater than the angle of the vehicle rear side face of the water drainage groove 16G with respect to the opening plane of the water drainage groove 16G. Thus, water that has infiltrated between the insertion cylinder 16F and the fitting cylinder 24G can be better suppressed from infiltrating into the housing space 26 from between the insertion cylinder 16F and the fitting cylinder 24G, by effectively utilizing the action of movement force from the vehicle front side face of the water drainage groove 16G toward the vehicle rear side.

### Modified Examples

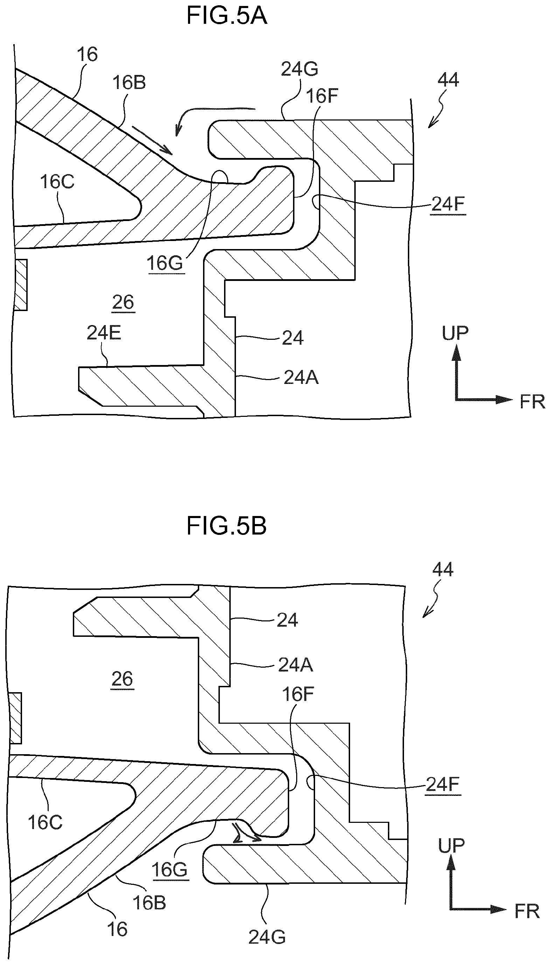

Fig. 5A is an enlarged cross-section of relevant portions at an upper side section of a vehicle door mirror device 44, which serves as a vehicle visual recognition device according to a modified example of the first exemplary embodiment of the present invention, as viewed from a vehicle width direction outside (vehicle right side). Fig. 5B is an enlarged cross-section of relevant portions at a lower side section of the vehicle door mirror device 44, as viewed from a vehicle width direction outside.

As illustrated in Fig. 5A and Fig. 5B, in the vehicle door mirror device 44 according to the present modified example, a water drainage groove 16G of an insertion cylinder 16F in a visor body 16 has a substantially trapezoidal profile in cross-section, with an increased width dimension (vehicle front-rear direction dimension) of the water drainage groove 16G. The fitting cylinder 24G of a bottom wall portion 24A of a reinforcement 24 is not disposed at the outer peripheral side of the vehicle rear side portion of the water drainage groove 16G. The vehicle rear side portion of the water drainage groove 16G is accordingly open toward the outer peripheral side (the opposite side from the housing space 26), so as to open downward at a lower side of the center axis line of the water drainage groove 16G (the center axis line of the insertion cylinder 16F).

The present modified example is according also able to exhibit similar operation and advantageous effect to those of the first exemplary embodiment described above.

Moreover, the width dimension of the water drainage groove 16G has been increased. This means that a larger amount of water can flow down the water drainage groove 16G, enabling better suppression of water from infiltrating into the housing space 26 from between the insertion cylinder 16F and the fitting cylinder 24G.

Moreover, the vehicle rear side portion of the water drainage groove 16G is open toward the outer peripheral side, and is open downward at a lower side of the center axis line of the water drainage groove 16G. Thus, at the lower side of the center axis line of the water drainage groove 16G, water flowing down the water drainage groove 16G can be discharged downward from the water drainage groove 16G, enabling water to be effectively suppressed from infiltrating into the housing space 26 from between the insertion cylinder 16F and the fitting cylinder 24G.

### Second Exemplary Embodiment

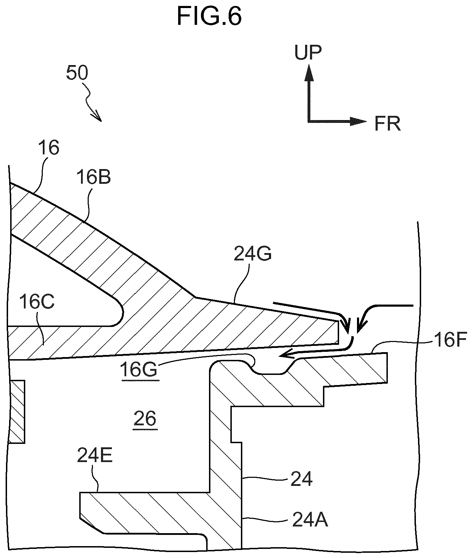

Fig. 6 is an enlarged cross-section of relevant portions at an upper side section of a vehicle door mirror device 50, which serves as a vehicle visual recognition device according to a second exemplary embodiment of the present invention, as viewed from a vehicle width direction outside (vehicle right side).

The vehicle door mirror device 50 according to the present exemplary embodiment has substantially the same configuration as that of the first exemplary embodiment described above, but differs with respect to the following points.

In the vehicle door mirror device 50 according to the present exemplary embodiment, a visor body 16 serves as an outer peripheral member of the present invention, and reinforcement 24 serves as an inner peripheral member of the present invention.

As illustrated in Fig. 6, in the visor body 16, a fitting cylinder 24G of the first exemplary embodiment as described above is provided to the vehicle front side end portion of a support wall 16B, and the fitting cylinder 24G projects toward the vehicle front side and is disposed coaxially to a support wall 16B. The outer peripheral face of the fitting cylinder 24G is inclined in a direction toward the radial direction inside of the fitting cylinder 24G on progression toward the vehicle front side. The inner peripheral face of the fitting cylinder 24G is inclined in a direction toward the radial direction inside of the fitting cylinder 24G on progression toward the vehicle rear side.

In the reinforcement 24, an insertion cylinder 16F of the first exemplary embodiment is provided at outer peripheral end portion of the vehicle front side face of the bottom wall portion 24A. The insertion cylinder 16F projects toward the vehicle front side and an outer peripheral face of the insertion cylinder 16F is disposed coaxially to the bottom wall portion 24A. The outer peripheral face of the insertion cylinder 16F is inclined in a direction toward the radial direction inside of the insertion cylinder 16F on progression toward the vehicle rear side, and an inclination angle of the outer peripheral face of the insertion cylinder 16F to the vehicle front-rear direction is the same as the inclination angle of the inner peripheral face of the fitting cylinder 24G to the vehicle front-rear direction. A water drainage groove 16G having a trapezoidal profile in cross-section is formed around the entire periphery at a vehicle rear side portion of the outer peripheral face of the insertion cylinder 16F. The water drainage groove 16G extends along the peripheral direction of the insertion cylinder 16F, and a bottom face of the water drainage groove 16G is disposed parallel to the axial direction of the insertion cylinder 16F. A width direction (the insertion cylinder 16F outer peripheral face generating line direction) dimension of the water drainage groove 16G increases on progression toward the radial direction outside of the insertion cylinder 16F. The vehicle rear side face of the water drainage groove 16G has a larger angle, than the vehicle front side face of the water drainage groove 16G, with respect to the opening plane of the water drainage groove 16G (a plane in the same plane as the outer peripheral face of the insertion cylinder 16F).

A vehicle rear side portion of the insertion cylinder 16F of the reinforcement 24 is inserted inside the fitting cylinder 24G of the visor body 16, and the outer peripheral face of the insertion cylinder 16F substantially fits together with the inner peripheral face of the fitting cylinder 24G. The vehicle front side of the support wall 16B, the covering wall 16C, and the coupling wall 16D of the visor body 16 are accordingly covered and blocked off by the bottom wall portion 24A of the reinforcement 24, forming a housing space 26 between the bottom wall portion 24A and the support wall 16B, the covering wall 16C, and the coupling wall 16D. Moreover, the entire water drainage groove 16G in the insertion cylinder 16F is inserted inside the fitting cylinder 24G (see Fig. 6).

Thus water (liquid) from the outer peripheral face of the fitting cylinder 24G and the outer peripheral face of the insertion cylinder 16F that infiltrates between the insertion cylinder 16F and the fitting cylinder 24G flows into the water drainage groove 16G. The water (liquid) accordingly flows down the water drainage groove 16G, and flows down (drains) from the bottom end of the water drainage groove 16G. This enables water to be suppressed from infiltrating into the housing space 26 from between the insertion cylinder 16F and the fitting cylinder 24G, and enables water to be suppressed from reaching the mirror face adjustment mechanism 28 (and in particular the motors 30). Moreover, being able to suppress infiltration of water into the housing space 26 by suppression using the water drainage groove 16G alone enables simplification of the configuration to suppress water infiltrating into the housing space 26. This can also be accomplished without needing to add any separate components (for example, a rubber ring) to suppress infiltration of water into the housing space 26. This enables costs to be reduced due to not needing to increase the number of components or the number of assembly processes.

Moreover, the water drainage groove 16G in the insertion cylinder 16F is inserted inside the fitting cylinder 24G, and a gap dimension between the insertion cylinder 16F and the fitting cylinder 24G at a portion further toward the vehicle rear side than the water drainage groove 16G is made smaller than the gap dimension between the insertion cylinder 16F and the fitting cylinder 24G at the portion where the water drainage groove 16G is disposed. This means that water that has infiltrated between the insertion cylinder 16F and the fitting cylinder 24G can be better suppressed from infiltrating into the housing space 26 from between the insertion cylinder 16F and the fitting cylinder 24G, by utilizing the action of movement force from the vehicle rear side face and bottom face of the water drainage groove 16G toward the vehicle front side (from the housing space 26 side toward the opposite side from the housing space 26).

Furthermore, a depth dimension of a vehicle rear side portion of the water drainage groove 16G increases on progression toward the vehicle front side. Thus water that has infiltrated between the insertion cylinder 16F and the fitting cylinder 24G can be better suppressed from infiltrating into the housing space 26 from between the insertion cylinder 16F and the fitting cylinder 24G, by utilizing the action of movement force from the vehicle rear side face and bottom face of the water drainage groove 16G toward the vehicle front side.

Moreover, the angle of the vehicle rear side face of the water drainage groove 16G with respect to the opening plane of the water drainage groove 16G is made greater than the angle of the vehicle front side face of the water drainage groove 16G with respect to the opening plane of the water drainage groove 16G. Thus, water that has infiltrated between the insertion cylinder 16F and the fitting cylinder 24G can be better suppressed from infiltrating into the housing space 26 from between the insertion cylinder 16F and the fitting cylinder 24G by effectively utilizing the action of movement force from the vehicle rear side face of the water drainage groove 16G toward the vehicle front side.

### Modified Examples

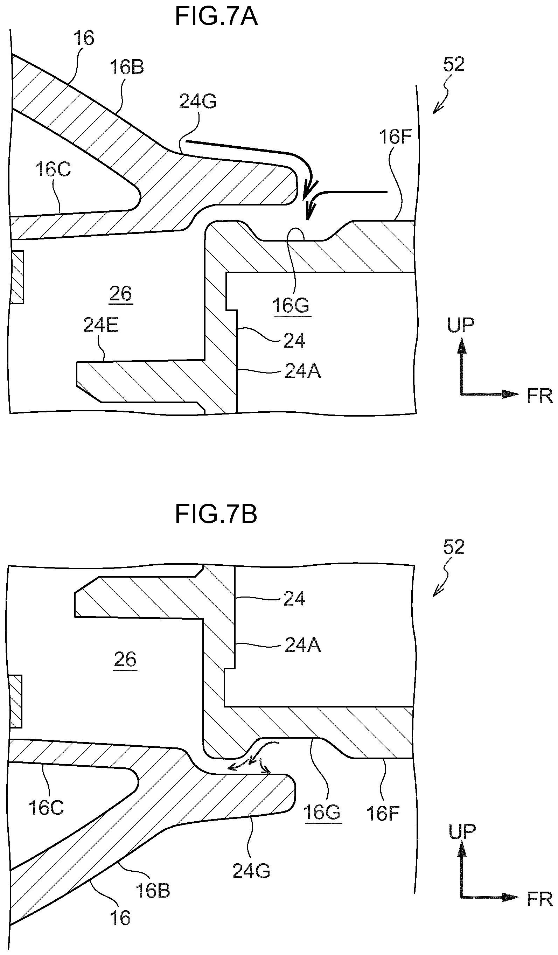

Fig. 7A is an enlarged cross-section of relevant portions at an upper side section of a vehicle door mirror device 52, which serves as a vehicle visual recognition device according to a modified example of the second exemplary embodiment of the present invention, as viewed from a vehicle width direction outside (vehicle right side). Fig. 7B is an enlarged cross-section of relevant portions at a lower side section of the vehicle door mirror device 52, as viewed from a vehicle width direction outside.

As illustrated in Fig. 7A and Fig. 7B, in the vehicle door mirror device 52 according to the present modified example, in a visor body 16, an inner peripheral face of a fitting cylinder 24G is disposed parallel to a center axis line of a support wall 16B, and an axial direction dimension of the fitting cylinder 24G is made smaller.

In reinforcement 24, an outer peripheral face of an insertion cylinder 16F is disposed parallel to a center axis line of a bottom wall portion 24A, and the width direction dimension (vehicle front-rear direction dimension) of the water drainage groove 16G in the insertion cylinder 16F is made larger. A fitting cylinder 24G of the visor body 16 is not disposed at the outer peripheral side of a vehicle front side portion of the water drainage groove 16G. The vehicle front side portion of the water drainage groove 16G is accordingly open to the outer peripheral side (the opposite side from the housing space 26), and is open downward at a lower side of the center axis line of the water drainage groove 16G (the center axis line of the insertion cylinder 16F).

The present modified example is also able to exhibit similar operation and advantageous effects to those of the second exemplary embodiment.

Moreover, the width dimension of the water drainage groove 16G is made larger. A larger amount of water can accordingly flow down the water drainage groove 16G, enabling better suppression of water from infiltrating into the housing space 26 from between the insertion cylinder 16F and the fitting cylinder 24G.

Moreover, the vehicle front side portion of the water drainage groove 16G is open at the outer peripheral side, and is open downward at the lower side of the center axis line of the water drainage groove 16G. Thus at the lower side of the center axis line of the water drainage groove 16G, the water flowing down the water drainage groove 16G can be discharged downward from the water drainage groove 16G, enabling water to be effectively suppressed from infiltrating into the housing space 26 from between the insertion cylinder 16F and the fitting cylinder 24G.

### Third Exemplary Embodiment

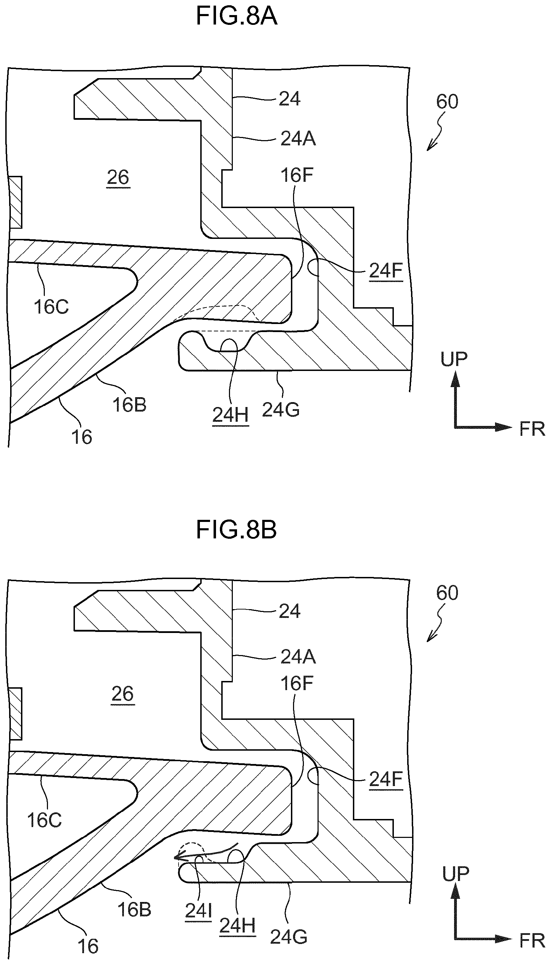

Fig. 8A is an enlarged cross-section of relevant portions at a lower side section of a vehicle door mirror device 60, serving as a vehicle visual recognition device according to a third exemplary embodiment of the present invention, as viewed from a vehicle width direction outside (vehicle right side).

The vehicle door mirror device 60 according to the present exemplary embodiment has a configuration substantially similar to that of the modified example of the first exemplary embodiment described above, but differs with respect to the following points.

As illustrated in Fig. 8A, in the vehicle door mirror device 60 according to the present exemplary embodiment, a water drainage groove 16G of an insertion cylinder 16F of a visor body 16 is not formed at the lower side of a center axis line of the insertion cylinder 16F, and is only formed at the upper side of the center axis line of the insertion cylinder 16F (see Fig. 5A).

At an inner peripheral face of a fitting cylinder 24G of reinforcement 24 at the lower side of a center axis line of the fitting cylinder 24G (a portion disposed at the lower side of the insertion cylinder 16F), a drainage groove 24H is formed with a trapezoidal profile in cross-section, which serves as a recess portion. The drainage groove 24H extends along the peripheral direction of the fitting cylinder 24G. The width direction (vehicle front-rear direction) dimension of the drainage groove 24H increases on progression toward the radial direction inside of the fitting cylinder 24G, and the drainage groove 24H is aligned with a vehicle front-rear direction position of the water drainage groove 16G in the insertion cylinder 16F.

As illustrated in Fig. 8B, an opening groove 241, which serves as open portion and has a substantially trapezoidal profile in cross-section, is formed in an inner peripheral face at a lower end portion of the fitting cylinder 24G, at the vehicle rear side of the drainage groove 24H. The opening groove 241 opens the drainage groove 24H toward the vehicle rear side (the opposite side from the housing space 26).

A water drainage groove 16G is provided on the outer peripheral face of the insertion cylinder 16F at the upper side of the center axis line of the insertion cylinder 16F, and the drainage groove 24H is provided on the inner peripheral face of the fitting cylinder 24G at the lower side of the center axis line of the fitting cylinder 24G. Thus water (liquid) from the outer peripheral face of the support wall 16B of the visor body 16 and the outer peripheral face of the fitting cylinder 24G that infiltrates between the insertion cylinder 16F and the fitting cylinder 24G, flows into the water drainage groove 16G or into the drainage groove 24H. The water (liquid) thereby flows down the water drainage groove 16G and the drainage groove 24H, or down the drainage groove 24H, and flows downward (drains) from the lower end of the drainage groove 24H. This enables water to be suppressed from infiltrating into the housing space 26 from between the insertion cylinder 16F and the fitting cylinder 24G, and enables water to be suppressed from reaching the mirror face adjustment mechanism 28 (and in particular the motors 30). Moreover, being able to suppress infiltration of water into the housing space 26 by suppression using the water drainage groove 16G and the drainage groove 24H alone enables simplification of the configuration to suppress water infiltrating into the housing space 26. This can also be accomplished without needing to add any separate components (for example, a rubber ring) to suppress infiltration of water into the housing space 26. This enables costs to be reduced due to not needing to increase the number of components or the number of assembly processes.

Moreover, the insertion cylinder 16F is inserted inside the fitting cylinder 24G, and a gap dimension between the insertion cylinder 16F and the fitting cylinder 24G at a portion further toward vehicle front side than the water drainage groove 16G is made smaller than the gap dimension between the insertion cylinder 16F and the fitting cylinder 24G at the portion where the water drainage groove 16G is disposed. Also, the gap dimension between the insertion cylinder 16F and the fitting cylinder 24G at a portion further toward vehicle front side than the drainage groove 24H is made smaller than the gap dimension between the insertion cylinder 16F and the fitting cylinder 24G at the portion where the drainage groove 24H is disposed. This means that water that has infiltrated between the insertion cylinder 16F and the fitting cylinder 24G can be better suppressed from infiltrating into the housing space 26 from between the insertion cylinder 16F and the fitting cylinder 24G, by utilizing the action of movement force from the vehicle front side face of the water drainage groove 16G and the vehicle front side face of the drainage groove 24H toward the vehicle rear side (from the housing space 26 side toward the opposite side from the housing space 26).

Furthermore, depth dimensions of a vehicle front side portion of the water drainage groove 16G and a vehicle front side portion of the drainage groove 24H increase on progression toward the vehicle rear side. Thus water that has infiltrated between the insertion cylinder 16F and the fitting cylinder 24G can be better suppressed from infiltrating into the housing space 26 from between the insertion cylinder 16F and the fitting cylinder 24G, by utilizing the action of movement force from the vehicle front side face of the water drainage groove 16G and the vehicle front side face of the drainage groove 24H toward the vehicle rear side.

Moreover, the angle of the vehicle front side face of the water drainage groove 16G with respect to the opening plane of the water drainage groove 16G is made larger than the angle of the vehicle rear side face of the water drainage groove 16G with respect to the opening plane of the water drainage groove 16G. Thus water that has infiltrated between the insertion cylinder 16F and the fitting cylinder 24G can be better suppressed from infiltrating into the housing space 26 from between the insertion cylinder 16F and the fitting cylinder 24G by effectively utilizing the action of movement force from the vehicle front side face of the water drainage groove 16G toward the vehicle rear side.

Moreover, at a lower end portion of the fitting cylinder 24G, the drainage groove 24H is opened to the vehicle rear side by the opening groove 241. Thus water that has flowed down to a lower end portion of the drainage groove 24H can be discharged by the opening groove 241 to the vehicle rear side, enabling water to be effectively suppressed from infiltrating into the housing space 26 from between the insertion cylinder 16F and the fitting cylinder 24G.

### Fourth Exemplary Embodiment

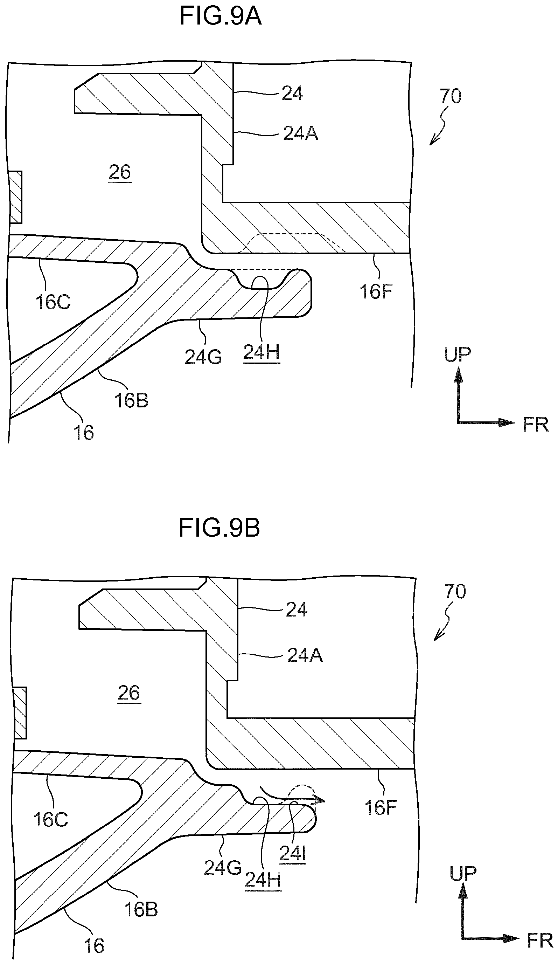

Fig. 9A is an enlarged cross-section of relevant portions at a lower side section of a vehicle door mirror device 70, which serves as a vehicle visual recognition device according to a fourth exemplary embodiment of the present invention, as viewed from a vehicle width direction outside (vehicle right side).

The vehicle door mirror device 70 according to the present exemplary embodiment has configuration substantially similar to that of the modified example of the second exemplary embodiment, but differs with respect to the following points.

As illustrated in Fig. 9A, in the vehicle door mirror device 70 according to the present exemplary embodiment, a water drainage groove 16G of an insertion cylinder 16F of reinforcement 24 is not formed at a lower side of a center axis line of the insertion cylinder 16F, and is only formed at an upper side of the center axis line of the insertion cylinder 16F (see Fig. 7A).

A drainage groove 24H, which serves as a recess portion and is formed with a trapezoidal profile in cross-section, is formed in the inner peripheral face of a fitting cylinder 24G of a visor body 16 at the lower side of an center axis line of the fitting cylinder 24G (a portion disposed at a lower side of the insertion cylinder 16F). The drainage groove 24H extends along the peripheral direction of the fitting cylinder 24G. The width direction (vehicle front-rear direction) dimension of the drainage groove 24H increases on progression toward the radial direction inside of the fitting cylinder 24G. The drainage groove 24H is aligned with a vehicle front-rear direction position of the water drainage groove 16G in the insertion cylinder 16F.

As illustrated in Fig. 9B, an opening groove 241, which serves as an open portion and has a substantially trapezoidal profile in cross-section, is formed in the inner peripheral face at a lower end portion of the fitting cylinder 24G, at the vehicle front side of the drainage groove 24H. The opening groove 241 opens the drainage groove 24H to the vehicle front side (the opposite side from the housing space 26).

A water drainage groove 16G is provided on the outer peripheral face of the insertion cylinder 16F at an upper side of a center axis line of the insertion cylinder 16F, and the drainage groove 24H is provided on the inner peripheral face of the fitting cylinder 24G at a lower side of the center axis line of the fitting cylinder 24G. Thus water (liquid) infiltrating from the outer peripheral face of the fitting cylinder 24G and the outer peripheral face of the insertion cylinder 16F between the insertion cylinder 16F and the fitting cylinder 24G flows into the water drainage groove 16G or the drainage groove 24H, flows down the water drainage groove 16G and the drainage groove 24H or down the drainage groove 24H, and flows downward (drains) from a lower end of the drainage groove 24H. Water can accordingly be suppressed from infiltrating into the housing space 26 from between the insertion cylinder 16F and the fitting cylinder 24G, enabling water to be suppressed from reaching the mirror face adjustment mechanism 28 (and in particular the motors 30). Moreover, being able to suppress infiltration of water into the housing space 26 by suppression using the water drainage groove 16G and the drainage groove 24H alone enables simplification of the configuration to suppress water infiltrating into the housing space 26. This can also be accomplished without needing to add any separate components (for example, a rubber ring) to suppress infiltration of water into the housing space 26. This enables costs to be reduced due to not needing to increase the number of components or the number of assembly processes.

Moreover, the insertion cylinder 16F is inserted inside the fitting cylinder 24G, and a gap dimension between the insertion cylinder 16F and the fitting cylinder 24G at a portion further toward the vehicle rear side than the water drainage groove 16G is made smaller than the gap dimension between the insertion cylinder 16F and the fitting cylinder 24G at the portion where the water drainage groove 16G is disposed. Also, the gap dimension between the insertion cylinder 16F and the fitting cylinder 24G at a portion further toward the vehicle rear side than the drainage groove 24H is made smaller than the gap dimension between the insertion cylinder 16F and the fitting cylinder 24G at a portion where the drainage groove 24H is disposed. This means that water that has infiltrated between the insertion cylinder 16F and the fitting cylinder 24G can be better suppressed from infiltrating into the housing space 26 from between the insertion cylinder 16F and the fitting cylinder 24G, by utilizing the action of movement force from the vehicle rear side face of the water drainage groove 16G and the vehicle rear side face of the drainage groove 24H toward the vehicle front side (from the housing space 26 side toward the opposite side from the housing space 26).

Moreover, the depth dimension of the vehicle rear side portion of the water drainage groove 16G and the vehicle rear side portion of the drainage groove 24H increases on progression toward the vehicle front side. This enables water that has infiltrated between the insertion cylinder 16F and the fitting cylinder 24G to be better suppressed from infiltrating into the housing space 26 from between the insertion cylinder 16F and the fitting cylinder 24G, by utilizing the action of movement force from the vehicle rear side face of the water drainage groove 16G and the vehicle rear side face of the drainage groove 24H toward the vehicle front side.

Moreover, an angle of the vehicle rear side face of the water drainage groove 16G with respect to the opening plane of the water drainage groove 16G is made larger than an angle of the vehicle front side face of the water drainage groove 16G with respect to the opening plane of the water drainage groove 16G. Thus water that has infiltrated between the insertion cylinder 16F and the fitting cylinder 24G can thereby be better suppressed from infiltrating into the housing space 26 from between the insertion cylinder 16F and the fitting cylinder 24G by effectively utilizing the action of movement force from the vehicle rear side face of the water drainage groove 16G toward the vehicle front side.

Moreover, at a lower end portion of the fitting cylinder 24G, the drainage groove 24H is opened by the opening groove 241 toward the vehicle front side. Thus water that has flowed down to the lower end portion of the drainage groove 24H can be discharged out to the vehicle front side by the opening groove 241, enabling water to be effectively suppressed from infiltrating into the housing space 26 from between the insertion cylinder 16F and the fitting cylinder 24G.

Note that in the first exemplary embodiment (including the modified example), the second exemplary embodiment (including the modified example), the third exemplary embodiment, and the fourth exemplary embodiment, the angle of the vehicle front side faces and the vehicle rear side faces of the water drainage grooves 16G, 24H with respect to the opening plane of the water drainage grooves 16G, 24H is less than 90°. However, the angle of the vehicle front side faces and the vehicle rear side faces of the water drainage grooves 16G, 24H with respect to the opening plane of the water drainage grooves 16G, 24H may be 90° or greater.

Moreover, in the first exemplary embodiment (including the modified example), the second exemplary embodiment (including the modified example), the third exemplary embodiment, and the fourth exemplary embodiment, the mirror body 38 serves as a visual recognition means. However, a camera to assist visual recognition by an occupant by imaging may serve as the visual recognition means.

Furthermore, in the first exemplary embodiment (including the modified example), the second exemplary embodiment (including the modified example), the third exemplary embodiment, and the fourth exemplary embodiment, the vehicle door mirror device 10, 44, 50, 52, 60, 70 (vehicle visual recognition device) is installed at the outside of a door of a vehicle. However, the vehicle visual recognition device may be installed at another position on a vehicle.

The entire content of the disclosure of Japanese Patent Application No. 2016-19218 filed on February 3, 2016 is incorporated by reference in the present specification. Explanation of the Reference Numerals

- 10: vehicle door mirror device (vehicle visual recognition device)
- 16: visor body (housing body, inner peripheral member, outer peripheral member)
- 16F: insertion cylinder (inside portion)
- 16G: water drainage groove (recess portion)
- 24: reinforcement (housing body, outer peripheral member, inner peripheral member)
- 24G: fitting cylinder (outside portion)
- 24H: drainage groove (recess portion)
- 26: housing space
- 28: mirror face adjustment mechanism (operating mechanism)
- 38: mirror body (visual recognition means)
- 44: vehicle door mirror device (vehicle visual recognition device)
- 50: vehicle door mirror device (vehicle visual recognition device)
- 52: vehicle door mirror device (vehicle visual recognition device)
- 60: vehicle door mirror device (vehicle visual recognition device)
- 70: vehicle door mirror device (vehicle visual recognition device)

## Claims

1. A vehicle visual recognition device comprising:
a visual recognition means to assist visual recognition by an occupant of a vehicle;
an operating mechanism that is operated so as to tilt the visual recognition means; and
a housing body including an outer peripheral member and an inner peripheral member, the outer peripheral member being disposed at an outer peripheral side of an inside portion of the inner peripheral member, a housing space being formed between the inner peripheral member and the outer peripheral member, and the operating mechanism being housed in the housing space; and
a recess portion provided on an outer peripheral face of the inside portion and enabling downward flow of a liquid.

2. The vehicle visual recognition device of claim 1, wherein the recess portion is provided on an outer peripheral face of an upper side section of the inside portion.

3. A vehicle visual recognition device comprising:
a visual recognition means to assist visual recognition by an occupant of a vehicle;
an operating mechanism that is operated so as to tilt the visual recognition means; and
a housing body including an inner peripheral member and an outer peripheral member, the inner peripheral member being disposed at an inner peripheral side of an outside portion of the outer peripheral member, a housing space being formed between the inner peripheral member and the outer peripheral member, and the operating mechanism being housed in the housing space; and
a recess portion provided on an inner peripheral face of the outside portion and enabling downward flow of a liquid.

4. The vehicle visual recognition device of claim 3, wherein the recess portion is provided on an inner peripheral face of a lower side section of the outside portion.

5. A vehicle visual recognition device comprising:
a visual recognition means to assist visual recognition by an occupant of a vehicle;
an operating mechanism that is operated so as to tilt the visual recognition means; and
a housing body including an outer peripheral member and an inner peripheral member, an outside portion of the outer peripheral member being disposed at an outer peripheral side of an inside portion of the inner peripheral member, a housing space being formed between the inner peripheral member and the outer peripheral member, and the operating mechanism being housed in the housing space; and
a recess portion provided at whichever an outer peripheral face of the inside portion or an inner peripheral face of the outside portion is disposed at a lower side, and enabling downward flow of a liquid.

6. The vehicle visual recognition device of any one of claim 1 to claim 5, wherein a gap dimension between the inside portion and the outer peripheral member, or a gap dimension between the inner peripheral member and the outside portion, is smaller on a housing space side than on an opposite side from the housing space.

7. The vehicle visual recognition device of any one of claim 1 to claim 6, wherein a depth dimension of the recess portion increases on progression from a housing space side toward an opposite side from the housing space.

8. The vehicle visual recognition device of any one of claim 1 to claim 7, wherein an angle of a peripheral face of the recess portion with respect to an opening plane of the recess portion is greater on a housing space side than on an opposite side from the housing space.

9. The vehicle visual recognition device of any one of claim 1 to claim 8, wherein the recess portion is open on an opposite side from the housing space.
